# EUROPEAN PATENT SPECIFICATION

(11) **EP 1 474 020 B1**
(45) Date of publication and mention of the grant of the patent: **17.08.2005**
(21) Application number: 03734803.4
(22) Date of filing: 29.01.2003
(51) Int. Cl.: A47J 31/057

(54) **SILENT APPARATUS FOR PREPARING COFFEE EXTRACT**
GERÄUSCHLOSE VORRICHTUNG ZUR ZUBEREITUNG VON KAFFEE-EXTRAKT
APPAREIL SILENCIEUX POUR LA PREPARATION D'EXTRAIT DE CAFE

(30) Priority: 01.02.2002 EP 02075422
(43) Date of publication of application: 10.11.2004
(73) Proprietor: Koninklijke Philips Electronics N.V., 5621 BA Eindhoven (NL)
(72) Inventor: BENEDICTUS, Jan, H., NL-5656 AA Eindhoven (NL); NETTEN, Adriaan, NL-5656 AA Eindhoven (NL)
(74) Representative: Bos, Kornelis Sjoerd
(86) International application number: PCT/IB2003/000278
(87) International publication number: WO 2003/063661

(56) References cited:
- DE-A- 2 715 772
- US-A- 5 860 354

## Description

The invention relates to an apparatus for preparing coffee extract according to the pre-characterizing portion of claim 1.

Such an apparatus is disclosed in DE-A 27 21 562. In this type of apparatus, the flow heater serves for heating water to be fed to the ground coffee and for generating steam which urges water to the ground coffee. The coffee maker according to the document comprises a spray head connected to a downstream end of the conduit. The spray head has a central outlet opening and a plurality of further openings arranged concentrically with the central opening. According to this document, the problem of gurgling is solved by providing an upwardly open overflow receptacle between the central opening and the further openings, into which overflow receptacle the conduit debouches at a level below the upper edges of the overflow receptacle.

In operation, the overflow receptacle is filled with hot water and receives steam exiting the water conduit into the water, so that gurgling sounds caused by escaping steam are reduced. However, the formation of steam bursts causing the gurgling sounds is not reduced, so that the associated thermal and mechanical stresses to which the apparatus is exposed and additional scale deposits are not reduced. Moreover, the volume of the gurgling sounds is only damped, but the occurrence of such sounds is not substantially reduced.

A further apparatus is disclosed in DE-A-2715772, which comprises a buffer storage communicating with a portion of the water conduit between the flow heater and the extracting receptacle.

It is an object of the present invention to provide a solution which reduces the occurrence of steam bursts causing a gurgling sound in coffee makers with a flow heater for heating water and driving water to the ground coffee.

According to the present invention, this object is achieved by providing an apparatus as claimed in claim 1. By providing a buffer reservoir between the water feeding structure and the flow heater, water supply to the flow heater responds more quickly to expulsion of water from the portion of the water conduit downstream of the flow heater, so that the build-up of steam bursts in the flow heater is substantially reduced.

Particular elaborations of the invention are set forth in the dependent claims. Further features, effects, and details of the invention will be described below by way of example with reference to an embodiment shown in the drawing.
Fig. 1 is a schematic representation of an apparatus according to a first embodiment of the present invention, and
Fig. 2 is a side elevation of a buffer reservoir for an apparatus according to an alternative embodiment of the present invention.

The apparatus shown in the drawing comprises a water feeding structure formed by a water reservoir 1 and a one-way valve 2. The one-way valve is arranged in a conduit 3 communicating with the water reservoir 1. The conduit 3 leads to a position above an extracting receptacle 4 for receiving ground coffee 5. The extracting receptacle 4 has an outlet 6 for dispensing coffee extract obtained by the passage of water from the conduit 3 through the ground coffee 5. The extracting receptacle 4 is suspended at a distance above a support platform 10 on which a cup or jug 13 for receiving the coffee extract can be positioned. Instead of a single outlet, a plurality of outlets may alternatively be provided for dispensing coffee into a plurality of cups or jugs positioned under the extracting receptacle 4.

The water conduit 3 is provided with a flow heater 7 downstream of the one-way valve 2. The flow heater 7 is designed for heating water and generating steam so as to force water downstream of the flow heater 7 through the conduit 3 in the direction of the extracting receptacle 4. In this example, the flow heater 7 is incorporated in the platform 10, and the conduit 3 extends through the flow heater along an arc of about 270° to almost 360°.

In operation, after filling the water reservoir 1 to a given level 12, some of the water flows through the one-way valve 2 and reaches essentially the same level 12 in the conduit 3. When the flow heater is activated, water in the conduit 3 at the flow heater 7 is heated until steam is generated. This steam causes a pressure and volume increase of the water flow in the conduit 3. Due to the presence of the one-way valve 2 upstream of the flow heater 7, water is essentially prevented from being displaced in the direction of the water reservoir 1. Therefore, water displaced by the volume increase caused by the steam generation moves in the direction of the extracting receptacle 4 only.

The water expulsion from the conduit 3 brings the water level in the conduit 3 out of balance. To restore this balance, the hydrostatic pressure of water in the reservoir 1, which is operative through the one-way valve 2, causes a flow of water through the conduit 3 in a direction from the water reservoir 1 to the flow heater 7. Freshly supplied water reaching the flow heater 7 is again heated and steam is again generated, so that water in the portion 9 of the conduit 3 downstream of the flow heater 7 is urged further in the direction of the extracting receptacle 4.

A buffer storage is provided, which is formed by an air reservoir 8 and a channel 11 connecting the air reservoir 8 to a portion 9 of the conduit 3 between the one-way valve 2 and the flow heater 7. The buffer storage is adapted for receiving a volume of water which is variable in response to pressure fluctuations in the portion 9 of the conduit 3 between the one-way valve 2 and the flow heater 7. Water buffered in the buffer storage under the influence of pressure in the portion of the conduit 3 between the one-way valve 2 and the flow heater 7 is very quickly returned from the buffer storage to the conduit 3 in response to a reduction of the pressure in the conduit 3 resulting from the expulsion of water from the conduit 3. This prevents the intermittent generation of large amounts of steam and associated gurgling sound emissions. Thus, water is displaced from an upstream portion of the flow heater 7 before substantial amounts of steam are generated, so that steam is generated almost exclusively in a downstream portion of the flow heater 7 at a relatively constant rate.

The provision of a buffer storage between the water supply structure and the flow heater is particularly effective for preventing the emission of gurgling sounds in an apparatus in which the water feeding structure comprises a water reservoir 1 and a one-way valve 2 as in the apparatus according to the present example. However, a buffer storage may prevent gurgling in other apparatuses as well. For example, if water is supplied from the water mains under the control of a control valve in response to a pressure reduction in the conduit 3, the buffer storage 8, 11 can prevent or reduce gurgling by feeding water to the flow heater 7 more quickly and smoothly, in response to pressure reductions in the conduit 3 caused by expulsion of water from the conduit 3, than the water is supplied from the mains under the control of the control valve.

According to the present example, the buffer storage is adapted for retaining a medium, in the form of air, which is compressible in response to pressure fluctuations in the conduit 3. When the hydrostatic pressure in the conduit 3 rises as the water reservoir 1 is filled, air in the air reservoir 8 is entrapped and compressed so that water can flow into the channel 11 interconnecting the air reservoir 8 and the conduit 3. When the pressure in the conduit 3 sinks due to the expulsion of water from the conduit 3 and delay in the supply of water from the reservoir 1, water is quickly and smoothly forced from the channel 11 and into the conduit 3. A particular advantage of the provision of a compressible medium in the buffer storage is that the buffer storage itself does not need to have a variable internal volume and can therefore be of a simple, essentially rigid construction, which does not move or deform significantly when in operation.

The air reservoir is adapted for retaining air as the compressible medium. The use of air as the compressible medium is advantageous in that no special compressible measures need to be provided. According to the present example, air is entrapped for use as the compressible medium in that the air reservoir 8 is made to communicate with the conduit 3 at a level below a hermetically closed head space 14 in the air reservoir 8.

The air reservoir 8 is obtained in a constructively efficient manner in that a wall portion of the air reservoir 8 is formed by a wall portion of the water reservoir 1 and, more specifically, in that the head space 14 in the air reservoir 8 is bounded by an upwardly projecting portion of a bottom portion of the water reservoir 1.

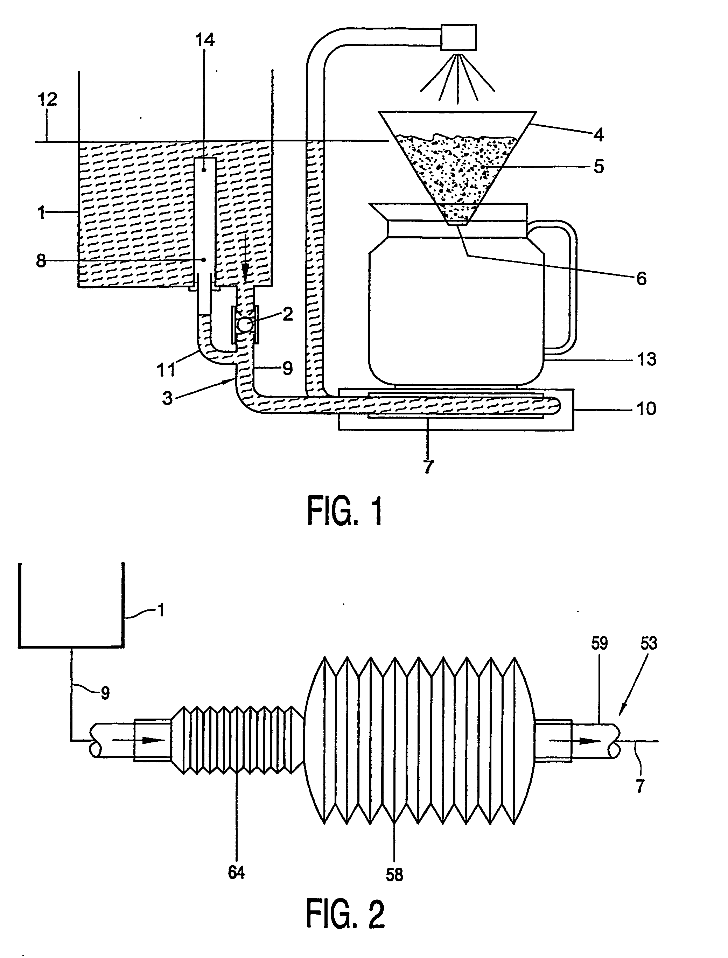

Within the framework of the present invention, many embodiments other than the apparatus described by way of example above are conceivable. For example, Fig. 2 shows an alternative buffer storage structure which comprises a buffer chamber 58 in the form of a first bellows portion of the wall of the conduit 53 and a second bellows portion 64 of the wall of the conduit 53. The first bellows portion 58 has a larger average cross-section than the second bellows portion 64. In response to a pressure rise in the portion 59 of the conduit 53 between the water feeding structure and the flow heater, the first bellows portion 58 expands and the second bellows portion 64 adapts itself to the expansion of the first bellows portion 58 by being compressed. This increases the total internal volume of the buffer storage structure 58, 64. When the pressure in the conduit 53 sinks, the first bellows portion 58 is compressed again and the second bellows portion 64 expands again, so that water is expelled from the buffer storage structure and driven to the flow heater.

Yet another option is, for example to retain a gaseous medium in a flexible reservoir such as a balloon or a bellows positioned in the conduit, or in a rigid or flexible buffer reservoir in or communicating with the conduit, so as to respond to the pressure fluctuations in the conduit.

## Claims

1. An apparatus for preparing coffee extract, comprising:
a water feeding structure (1, 2);
an extracting receptacle (4) for receiving ground coffee (5), the receptacle (4) having an outlet (6) for dispensing coffee extract;
a water conduit (3; 53) for conducting water from the water feeding structure (1, 2) towards the extracting receptacle (4); and
a flow heater (7) for heating water and generating steam in the water conduit (3; 53);
**characterized by**:
a buffer storage (8, 11; 58, 64) in or communicating with a portion of the water conduit (3; 53) between the water feeding structure (1, 2) and the flow heater (7) for accommodating a volume of water, which volume is variable in response to pressure fluctuations in a portion (9; 59) of the conduit (3; 53) located between the water feeding structure (1, 2) and the flow heater (7).

2. An apparatus as claimed in claim 1, wherein the water feeding structure (1, 2) comprises a water reservoir (1) and a one-way valve (2).

3. An apparatus as claimed in claim 1 or 2, wherein the buffer storage (8,11) is adapted for retaining a medium which is compressible in response to the pressure fluctuations.

4. An apparatus as claimed in claim 3, wherein the buffer storage (8, 11) is adapted for retaining air as the compressible medium.

5. An apparatus as claimed in claim 4, wherein the buffer storage comprises an air reservoir (8) communicating with the conduit (3) at a level below a head space (14) in the air reservoir (8) for retaining the air.

6. An apparatus as claimed in claims 2 and 5, wherein at least a portion of the wall of the air reservoir (8) is formed by a wall portion of the water reservoir (1).

7. An apparatus as claimed in claim 5 or 6, wherein the head space (14) in the air reservoir (8) is bounded by an upwardly projecting portion of a bottom portion of the water reservoir (1).

## Patentansprüche

1. Vorrichtung zur Zubereitung von Kaffee-Extrakt, die Folgendes umfasst:
eine Wasserzuführungskonstruktion (1, 2);
einen Extraktionsbehälter (4) zur Aufnahme von gemahlenem Kaffee (5), wobei der Behälter (4) einen Ausiass (6) zur Ausgabe von Kaffeeextrakt hat;
eine Wasserleitung (3, 53), um Wasser von der Wasserzuführungskonstruktion (1, 2) zu dem Extraktionsbehälter (4) zu leiten; und
ein Durchflussheizelement (7) zum Erhitzen von Wasser und Erzeugen von Dampf in der Wasserleitung (3, 53);
**gekennzeichnet durch**:
einen Pufferspeicher (8, 11; 58, 64) in oder kommunizierend mit einem Teil der Wasserleitung (3, 53) zwischen der Wasserzuführungskonstruktion (1, 2) und dem Durchflussheizelement (7) zum Aufnehmen eines Wasservolumens, wobei das Volumen auf Druckschwankungen in einem Teil (9; 59) der Wasserleitung (3, 53), der zwischen der Wasserzuführungskonstruktion (1, 2) und dem Durchflussheizelement (7) liegt, hin variabel ist.

2. Vorrichtung nach Anspruch 1, in welcher die Wasserzufiihrungskonstruktion (1, 2) ein Wasserreservoir (1) und ein Einwegventil (2) umfasst.

3. Vorrichtung nach Anspruch 1 oder 2, in welcher der Pufferspeicher (8, 11) angepasst ist, ein Medium zu speichern, das auf die Druckschwankungen hin komprimierbar ist.

4. Vorrichtung nach Anspruch 3, in welcher der Pufferspeicher (8, 11) angepasst ist, Luft als das komprimierbare Medium zu speichern.

5. Vorrichtung nach Anspruch 4, in welcher der Pufferspeicher ein Luftreservoir (8) umfasst, welches mit der Leitung (3) auf einer Höhe unterhalb eines Kopfraums (14) in dem Luftreservoir (8) zum Speichern der Luft kommuniziert.

6. Vorrichtung nach Anspruch 2 und 5, in welcher mindestens ein Teil der Wand des Luftreservoirs (8) durch einen Teil der Wand des Wasserreservoirs (1) gebildet wird.

7. Vorrichtung nach Anspruch 5 oder 6, in welcher der Kopfraum (14) in dem Luftreservoir (8) durch ein aufwärts vorstehendes Teil eines unteren Teils des Wasserreservoirs (1) begrenzt wird.

## Revendications

1. Appareil pour la préparation d'extrait de café comprenant :
une structure d'alimentation en eau (1, 2);
un récipient d'extraction (4) pour recevoir du café moulu (5), le récipient (4) ayant une ouverture d'écoulement (6) pour délivrer de l'extrait de café;
une conduite d'eau (3; 53) pour amener l'eau de la structure d'alimentation en eau (1, 2) vers le récipient d'extraction (4); et
un dispositif de chauffage de liquide (7) pour chauffer l'eau et produire de la vapeur dans la conduite d'eau (3;53);
**caractérisé par** :
un réservoir tampon (8, 11; 58, 64) dans une partie de la conduite d'eau (3; 53) ou en communication avec cette partie, entre la structure d'alimentation en eau (1, 2) et le dispositif de chauffage de liquide (7) pour contenir un volume d'eau, lequel volume est variable en réaction à des fluctuations de pression dans une partie (9; 59) de la conduite (3; 53) située entre la structure d'alimentation en eau (1, 2) et le dispositif de chauffage de liquide (7).

2. Appareil selon la revendication 1, la structure d'alimentation en eau (1, 2) comprenant un réservoir d'eau (1) et une vanne unidirectionnelle (2).

3. Appareil selon la revendication 1 ou 2, le réservoir tampon (8, 11) étant à même de contenir un milieu qui est compressible en réaction aux fluctuations de pression.

4. Appareil selon la revendication 3, le réservoir tampon (8, 11) étant à même de contenir de l'air comme milieu compressible.

5. Appareil selon la revendication 4, le réservoir tampon comprenant un réservoir d'air (8) communiquant avec la conduite (3) à un niveau inférieur à celui d'un espace supérieur (14) dans le réservoir d'air (8) pour retenir l'air.

6. Appareil selon les revendications 2 et 5, au moins une partie de la paroi du réservoir d'air (8) étant formée par une partie formant paroi du réservoir d'eau (1).

7. Appareil selon la revendication 5 ou 6, l'espace supérieur (14) dans le réservoir d'air (8) étant délimité par une partie en saillie verticale d'une partie de fond du réservoir d'eau (1).
